# EUROPÄISCHE PATENTSCHRIFT

(11) **EP 3 368 422 B1**
(45) Veröffentlichungstag und Bekanntmachung des Hinweises auf die Patenterteilung: **18.09.2019**
(21) Anmeldenummer: 16801553.5
(22) Anmeldetag: 26.10.2016
(51) Int. Cl.: B65B 55/02, A23L 3/04, B65B 55/04, B65B 55/10

(54) **LEBENSMITTELBEARBEITUNGSANLAGE MIT MEHREREN UMSCHLOSSENEN RÄUMEN, ZWISCHEN DENEN EIN BEHÄLTNISFÖRDERER ENGEORDNET IST**
FOOD-PROCESSING PLANT HAVING A PLURALITY OF SURROUNDED CHAMBERS, BETWEEN WHICH A CONTAINER CONVEYOR IS ARRANGED
INSTALLATION DE TRAITEMENT DE DENRÉES ALIMENTAIRES POURVUE DE PLUSIEURS EMPLACEMENTS FERMÉS, ENTRE LESQUELS EST DISPOSÉ UN TRANSPORTEUR DE CONTENANTS

(30) Priorität: 27.10.2015 DE 102015013914
(43) Veröffentlichungstag der Anmeldung: 05.09.2018
(73) Patentinhaber: Hipp & Co, 6072 Sachseln (CH)
(72) Erfinder: MOSER, Gerhard, 4801 Traunkirchen (AT); MOSER, Martin, 4801 Traunkirchen (AT)
(74) Vertreter: Schiweck Weinzierl Koch Patentanwälte Partnerschaft mbB
(86) Internationale Anmeldenummer: PCT/IB2016/001539
(87) Internationale Veröffentlichungsnummer: WO 2017/072574

(56) Entgegenhaltungen:
- EP-A1- 0 350 564
- DE-A1- 2 509 611
- DE-A1-102014 200 751

## Beschreibung

Die Erfindung betrifft eine Lebensmittelbearbeitungsanlage mit mehreren umschlossenen Räumen, zwischen denen ein Behältnisförderer angeordnet ist.

Bei der Bearbeitung von Lebensmitteln ist darauf zu achten, dass die Lebensmittel durch die Raumluft nicht infiziert werden und insbesondere bei der Bearbeitung bei erhöhten Temperaturen sollten Oxidationsprozesse vermieden werden. Daher werden Lebensmittelbearbeitungsvorgänge in der Regel in geschlossenen Behältern oder zumindest in geschlossenen Räumen vorgenommen. Bei mehreren aufeinanderfolgenden Bearbeitungsvorgängen ergibt sich häufig die Notwendigkeit, das Lebensmittel in einem Behältnis von einem Raum in einen angrenzenden Raum zu fördern. Sofern die Räume unterschiedliche Atmosphären aufweisen, sollte das Fördern der Lebensmittel von Raum zu Raum möglichst wenig Gasaustausch zwischen den Räumen zur Folge haben. Hierzu eignen sich mechanische Klappen oder Vorhänge, die einen Gasaustausch jedoch nur reduzieren können. Gasvorhänge oder Schleusen sind hingegen aufwendig in der Herstellung und im Unterhalt.

Als Beispiel offenbart DE 25 09 611 A1 eine Vorrichtung zum sterilen Verpacken von Gütern in Behälter.

Daher liegt der Erfindung die Aufgabe zugrunde, eine Lebensmittelbearbeitungsanlage mit mehreren umschlossenen Räumen, zwischen denen ein Behältnisförderer angeordnet ist, so weiter zu entwickeln, dass die Behältnisse mit dem Behältnisförderer auf einfache Art und Weise von einem Raum in den anderen Raum gelangen, ohne dass dies einen beträchtlichen Gasaustausch zufolge hat.

Dies wird mit einer gattungsgemäßen Lebensmittelbearbeitungsanlage erreicht, bei der der Behältnisförderer mehrere Behältnisträgerelemente aufweist, die Behältnisträgerelemente eine ebene Oberfläche und darin Aufnahmen für Behältnisse aufweisen, sodass die Behältnisse weniger als 5 mm, vorzugsweise weniger als 3 mm, über die ebene Oberfläche vorstehen, und eine Behältnisabdeckung die die ebene Oberfläche während der Förderung eines Behältnisträgerelementes von einem Raum in den angrenzenden Raum abgedeckt.

Besonders vorteilhaft ist es, wenn die Behältnisse gar nicht über die ebene Oberfläche vorstehen. Im Praxiseinsatz hat sich bewährt, wenn der obere Rand der Behältnisse etwa 1 mm unter der ebenen Oberfläche liegt, damit sichergestellt ist, dass die Behältnisse nicht über das Behältnisträgerelement vorstehen.

Dabei ist eine Lebensmittelbearbeitungsanlage jegliche Anlage, die dazu geeignet ist, Lebensmittel zu bearbeiten. Hierzu zählen Bearbeitungsschritte wie beispielsweise das Einfüllen, Mischen; Erhitzen, Kochen, Abfüllen und das Verschließen der mit dem Lebensmittel befüllten Behälter.

Die umschlossenen Räume können Räume innerhalb eines Gebäudes sein, die durch Mauern oder Wände getrennt sind. Es können jedoch auch in einer Anlage ausgebildete abgeschlossene Bereiche sein, die dazu geeignet sind, in den Bereichen unterschiedliche Atmosphärenbedingungen einzustellen, wie beispielsweise Temperatur, Gasdruck oder Gaszusammensetzung.

Der Behältnisförderer ermöglicht es, Behältnisse von einem Raum zum anderen Raum zu fördern, wobei hierfür eine Öffnung zwischen den umschlossenen Räumen vorgesehen ist.

Die Behältnisträgerelemente dienen der Aufnahme des Verpackungsmaterials oder eines Behältnisses, in dem eine Lebensmittelbearbeitung vorgenommen wird. Die Behältnisträgerelemente haben eine im Wesentlichen ebene oder plane Oberfläche, die in der Regel aber nicht absolut plan sein muss, da die Behältnisse geringfügig über die Oberfläche vorstehen können, ohne dass dadurch die Funktion der Lebensmittelbearbeitungsanlage wesentlich beeinträchtigt wird.

Die Behältnisabdeckung, deckt die Oberseite des Behältnisträgerelementes und der darin aufgenommenen Behältnisse derart ab, dass während der Förderung des Behältnisträgerelementes von einem Raum in den angrenzenden Raum zwischen den Räumen möglichst wenig Gasaustausch entsteht.

Es versteht sich, dass die Oberseite der Behältnisträgerelemente nur in dem Bereich, in dem die Aufnahmen für die Behältnisse angeordnet sind, eben ausgebildet sein muss.

Um zu vermeiden, dass zwischen einzelnen Behältnisträgerelementen Gas von einem umschlossenen Raum in den angrenzenden umschlossenen Raum gelangt, wird vorgeschlagen, dass die Behältnisabdeckung in der Förderrichtung länger ist als das Behältnisträgerelement. Dadurch wird gewährleistet, dass auch die Übergänge zwischen einzelnen aufeinanderfolgenden Behältnisträgerelementen während der Förderung zwischen den Räumen abgedeckt bleiben.

Die Behältnisabdeckung sollte möglichst nahe an dem Behältnisträgerelement und den Behältnissen angeordnet sein, während sich das Behältnisträgerelement relativ zur Behältnisabdeckung bewegt. Dabei ist es besonders vorteilhaft, wenn die Behältnisabdeckung das Behältnisträgerelement berührungslos abdeckt. Das heißt, es verbleibt ein Spalt zwischen Behältnisabdeckung und Behältnisträgerelement, der einen Gasaustausch ermöglichen kann. Solange die Druckdifferenzen zwischen den angrenzenden Räumen jedoch nur im Bereich von weniger als 100 mbar und vorzugsweise weniger als 10 mbar liegen, entsteht kein Gasaustausch durch einen derartigen Spalt oder er ist zumindest vernachlässigbar. Dieser Gasaustausch kann noch dadurch verringert werden, dass der Spalt in Förderrichtung eine Breite von mehr als 5 cm aufweist.

Besonders vorteilhaft ist es, wenn mehrere aneinander angrenzende Räume einen in Förderrichtung ansteigenden Gasdruck aufweisen, um in dem Raum mit dem höchsten Gasdruck auszuschließen, dass Luft von außerhalb dieser Räume in Förderrichtung durch die Räume in diesen Raum eindringt.

Die Praxis hat gezeigt, dass es vorteilhaft ist, wenn die angrenzenden Räume nur über Spalten in Verbindung stehen, die eine Breite - gemessen als Abstand zwischen dem Behältnisträgerelement und der Behältnisabdeckung - von weniger als 3 mm, vorzugsweise weniger als 2 mm, haben.

Eine Weiterbildung sieht vor, dass die Lebensmittelbearbeitungsanlage eine Grundplatte aufweist, die der Behältnisabdeckung gegenüberliegend angeordnet ist, wo bei zwischen Behältnisabdeckung und Grundplatte ein Behältnisträgerelement angeordnet ist und vorzugsweise die Behältnisabdeckung in der Förderrichtung länger ist als das Behältnisträgerelement.

Dies führt dazu, dass das Behältnisträgerelement zwischen Grundplatte und Behältnisabdeckung gefördert werden kann und sowohl oberhalb des Behältnisträgerelementes als auch darunter möglichst keine Luft zwischen angrenzenden Räumen ausgetauscht wird. Die Gestaltung der Abmessung der Spalten und insbesondere deren Breite unterhalb des Behältnisträgerelementes zwischen Behältnisträgerelement und Grundplatte entsprechen dabei vorzugsweise den Abmessungen zwischen Behältnisträgerelement und Behältnisabdeckung.

Eine bevorzugte Ausführungsform sieht vor, dass der Behältnisförderer ein Endlosförderer ist. Dabei werden die Behältnisträgerelemente durch die umschlossenen Räume geführt und vorzugsweise außerhalb der umschlossenen Räume wieder zurückgeführt.

Um ein Behältnis und dessen Behältnisabdeckung gemeinsam zu entkeimen wird vorgeschlagen, dass das Behältnisträgerelement nebeneinander angeordnete Halterungen für Behältnisse und Behältnisdeckel aufweist. Dies ermöglicht es Behältnisse und Behältnisdeckel simultan zu fördern und zu behandeln, wie insbesondere zu sterilisieren. Eine separate Deckelentkeimung mit den damit verbundenen Problemen der sterilen Zuführung kann dadurch entfallen.

Um möglichst viele Behältnisse gleichzeitig bearbeiten zu können, wird vorgeschlagen, dass das Behältnisträgerelement mehr als fünf, vorzugsweise mehr als zehn Halterungen für Behältnisse aufweist.

Ein besonderer Einsatzbereich der Lebensmittelbearbeitungsanlage ist die Sterilisierung und Abfüllung. Daher wird vorgeschlagen, dass die Lebensmittelbearbeitungsanlage eine Abfüllanlage aufweist, die in einem der Räume angeordnet ist und mehrere Füllköpfe für jeweils einen von mehreren quer zur Förderrichtung angeordneten Behältern, vorzugsweise für alle Behälter eines Behältnisträgerelementes, zur gleichzeitigen Befüllung aufweist. Das Abstimmen der Anzahl und Position der Füllköpfe auf das Behältnisträgerelement ermöglicht die schnelle Befüllung mehrerer Behältnisse. In der Praxis sollten daher alle Behältnisse auf mindestens einer Linie quer zur Förderrichtung gleichzeitig befüllbar sein.

Besonders vorteilhaft ist es, wenn die Abfüll- oder Verschließanlage vor dem Verschließen des Behältnisses im Behältnis einen Unterdruck erzeugt. Dies ermöglicht es das Behältnis ohne Dampf zu befüllen. Besonders gute Ergebnisse wurden mit einem kurzzeitigen Unterdruck im Behältnis und einer Deckelvorwärmung zum Aufbringen eines vorgewärmten Deckels auf das Behältnis erzielt.

Um den Einfluss von Umgebungsluft auf das Produkt zu minimieren wird daher weiterhin vorgeschlagen, dass die Lebensmittelbearbeitungsanlage in einem der umschlossenen Räume eine Abfüllanlage und eine Behältnisverschließanlage aufweist.

Ein kontinuierlicher oder getakteter Bearbeitungsprozess wird dadurch begünstigt, dass die Lebensmittelbearbeitungsanlage einen umschlossenen Raum für eine Behältnisentkeimung und einen umschlossenen Raum für eine Behältnisspülbegasung aufweist.

Im Rahmen der Sterilisation bis zur Abfüllung wird vorgeschlagen, dass der Behältnisförderer Behältnis und Behältnisdeckel simultan durch die umschlossenen Räume fördert.

Um den Aufbau eines Druckgradienten zwischen Behältniszuführung und Abfüllung zu begünstigen wird vorgeschlagen, dass in Förderrichtung mehr als zwei und vorzugsweise mindestens vier umschlossene Räume mit unterschiedlicher Atmosphäre angeordnet sind, zwischen denen jeweils eine Behältnisabdeckung angeordnet ist.

Ein Eindringen von Luft im Bereich des Übergangs der Behältnisse von einem umschlossenen Raum in den angrenzenden umschlossenen Raum wird dadurch minimiert, dass in Förderrichtung von einem Raum in den angrenzenden Raum der Druck im Raum ansteigt.

Ein Ausführungsbeispiel einer erfindungsgemäßen Lebensmittelbearbeitungsanlage ist in der Zeichnung dargestellt und wird im Folgenden näher erläutert. Es zeigt
- Figur 1: eine teilweise geschnittene Seitenansicht einer Lebensmittelbearbeitungsanlage,
- Figur 2: eine Draufsicht auf ein Behältnisträgerelement für Becher,
- Figur 3: eine Draufsicht auf ein Behältnisträgerelement für Gläschen mit Deckel,
- Figur 4: einen Ausschnitt aus Figur 1 am Übergang zwischen zwei umschlossenen Räumen und
- Figur 5: eine vergrößerte Darstellung eines Ausschnittes aus Figur 1.

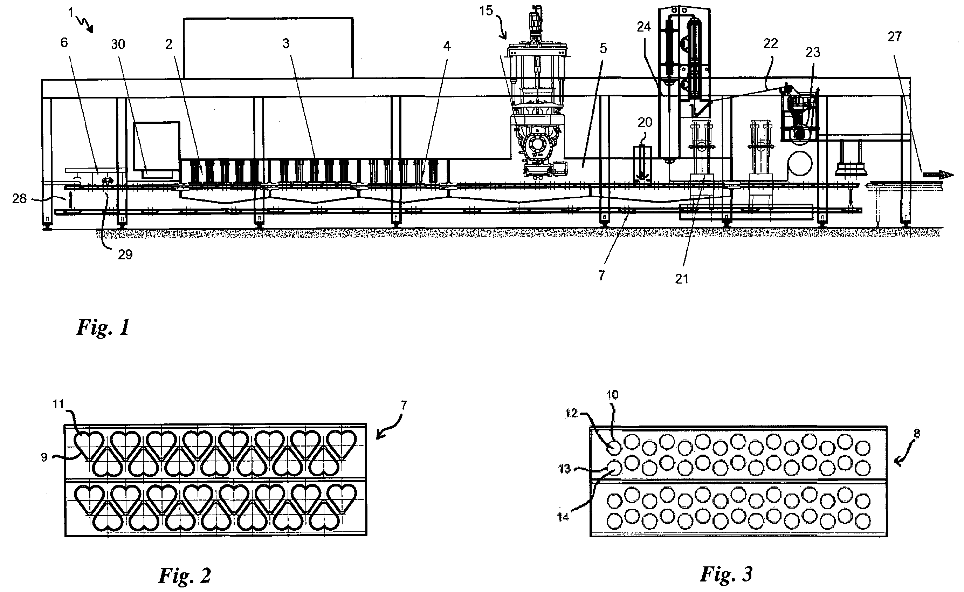

Die Figur 1 zeigt eine Lebensmittelbearbeitungsanlage 1 mit mehreren umschlossenen Räumen 2, 3, 4 und 5. Ein Behältnisförderer 6 dient dazu, Behältnisträgerelemente 7, 8 durch die Räume 1 bis 5 zu fördern. In den Behältnisträgerelementen 7, 8 sind Aufnahmen 9, 10 für darin anordenbare Behältnisse, wie beispielsweise herzförmige Schalen 11 oder Gläschen 12 vorgesehen.

In Figur 2 sind zwei Behältnisträgerelemente 7 dargestellt, die jeweils fünfzehn Aufnahmen 9 für fünfzehn herzförmige Kunststoffbecher 11 (nur exemplarisch beziffert) aufweisen.

Die Figur 3 zeigt zwei Behältnisträgerelemente 8, die jeweils fünfzehn Aufnahmen 10 für Babynahrungsgläschen 12 aufweisen (nur exemplarisch beziffert). Jeweils neben einer Aufnahme 10 bzw. einem Behältnis 12 ist bei dem in Figur 3 gezeigten Behältnisträgerelement 8 eine Aufnahme 13 für einen Behältnisdeckel 14 vorgesehen. Dies führt dazu, dass der Behältnisdeckel 14 mit dem Behältnis 12 mittels des Förderers 6 durch die Räume 3 bis 5 geführt wird und nach dem Füller 15, der neben dem Gläschen 12 auf dem Behältnisträgerelement 8 liegende Deckel 14, leicht gegriffen und auf das Gläschen 12 aufgesetzt werden kann.

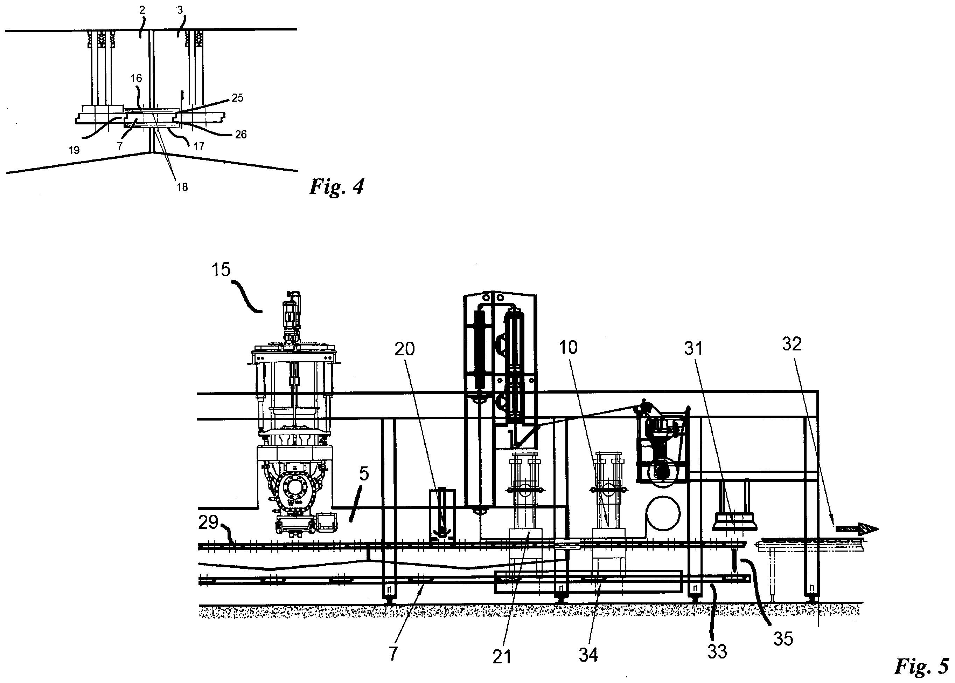

Die Figur 4 zeigt, wie zwischen zwei Räumen 2 und 3, 3 und 4 oder 4 und 5 sowie am Eintritt in den Raum 2 und am Austritt aus dem Raum 5 eine Behältnisabdeckung 16 oberhalb eines Behältnisträgerelementes 7 und eine Grundplatte 17 unterhalb des Behältnisträgerelementes 7 sehr nahe am Behältnisträgerelement 7 angeordnet sind. Die Behältnisabdeckung 16 und die Grundplatte 17 sind dabei in Förderrichtung etwas länger als das Behältnisträgerelement 7, sodass beim Schieben mehrerer Behältnisträgerelemente 7 zwischen Behältnisabdeckung 16 und Grundplatte 17 hindurch im Bereich des Überganges 18 zwischen den Räumen 2 und 3 der Stoß 19 zwischen zwei Behältnisträgerelementen 7 immer durch die Behältnisabdeckung 16 und die Grundplatte 17 abgedeckt ist.

Dadurch besteht im gezeigten Beispiel zwischen den Räumen 2 und 3 nur der Spalt zwischen dem Behältnisträgerelement 7 und der Behältnisabdeckung 16 und ein weiterer Spalt zwischen dem Behältnisträgerelement 7 und der Grundplatte 17.

Im vorliegenden Fall dient der Raum 2 der Packmittelentkeimung, indem dort mit Peroxid das Packmittel gespült wird. Im Raum 3 wird durch Spülen mit Sterilluft das Packmittel getrocknet und im Raum 4 wird mittels einer Stickstoffspülbegasung das eingesetzte Peroxid vollständig ausgetrieben. Daran schließt sich der Raum 5 an, in dem mittels des Füllers 15 mit fünfzehn Füllköpfen über eine fünfzehnfache Dosierung fünfzehn Behältnisse 11 oder 12 gleichzeitig befüllt werden. An der folgenden Station 20 werden direkt nach der Befüllung von Gläschen 12 vorgewärmte Stülpdeckel 14 von dem Behältnisträgerelement 7 abgenommen und auf das Behältnis 12 aufgesetzt.

Die Siegelstation 21 dient dazu, im Behältnisträgerelement 7 zugeführte Kunststoffbehältnisse 11 mit einer Siegelfolie 22 zu verschließen. Diese Siegelfolie 22 wird von einer Rolle 23 abgerollt, durchläuft eine Siegelfolienentkeimungsstation 24 und wird an der Siegelstation 21 auf die Behältnisse 9 gesiegelt.

Abfüllung und Deckelaufbringung bzw. Versiegelung werden in einem Raum 5 durchgeführt. Dieser Raum hat eine Atmosphäre mit einem Restsauerstoffgehalt von weniger als 0,2 %. Außerdem hat dieser Raum 5 einen höheren Gasdruck als der Raum 4, der Raum 4 hat wiederum einen höheren Gasdruck als der Raum 3 und der Raum 3 hat einen höheren Gasdruck als der Raum 2. Der Raum 2 hat wiederum einen etwas höheren Gasdruck als der Umgebungsdruck.

Dadurch entsteht in den Spalten 25 zwischen der Behältnisabdeckung 16 und dem Behältnisträgerelement 7 bzw. 8 und den Spalten 26 zwischen Behältnisträgerelement 7 bzw. 8 und der Grundplatte 17 ein Gasdruckgradient in Förderrichtung des Behältnisförderers 6. In Folge der geringen Spaltenbreite in senkrechter Erstreckung von etwa 1 mm und der Länge des Behältnisträgerelementes 7, 8, der Behältnisabdeckung 16 und der Grundplatte 17 in Förderrichtung des Behältnisförderers 6 ist der Strömungswiderstand in den Spalten 25, 26 derart gering, dass faktisch kein Gasaustausch stattfindet.

Der Behältnisförderer 6 besteht aus einer Einrichtung, die eine Vielzahl an Behältnisträgerelementen 7 bzw. 8 vorzugsweise die auf Schienen geführt und vorzugsweise kugelgelagert in der Förderrichtung 27 durch die Räume schiebt. Die Behältnisträgerelemente sind derart schwer, dass sie durch die gesamten Räume 2 bis 5 geschoben werden können, ohne aus einer waagerechten Ebene gedrückt zu werden. Außerhalb der Räume 2 bis 5 werden mit einer Hubeinrichtung 28 Behältnisträgerelemente 7, 8 auf eine obere Ebene 29 gehoben, auf der zunächst die Behältnisse 11 bzw. 12 und die Deckel 14 auf ein Behältnisträgerelement 7, 8 gesetzt werden. Zum Einsetzen der Becher 11 dient hierbei der Bechereinsetzer 30. Anschließend durchlaufen die Behältnisträgerelemente mit Behältnis und ggf. mit Deckel im Raum 2 eine Becherentkeimung, im Raum 3 eine Bechertrocknung und im Raum 4 eine Stickstoffspülbegasung. Danach gelangen die Behältnisträgerelemente 7, 8 in den Raum 5 zum Befüllen und Verschließen. Der Füller 15 füllt dabei alle fünfzehn Behältnisse gleichzeitig mit einem Lebensmittel, wie insbesondere einer Babynahrung, der Stülpdeckelsetzer 20 erwärmt die Stülpdeckel, erzeugt einen Unterdruck im Behältnis und setzt den Stülpdeckel auf das Behältnis. Die sterile Umgebung ermöglicht es dabei, die Behältnisse ohne ein Einblasen von Dampf zu verschließen.

Insbesondere für Kunststoffbehältnisse dient die Siegelstation 21, mit der Behältnisse verschlossen werden, die an Stelle eines Deckels eine Folie als Verschluss aufweisen.

Außerhalb des Raumes 5 für Befüllung und Verschluss ist eine Stanze 10 vorgesehen, bevor an der Pick and Place Station 31 die Behältnisse aus den Behältnisträgerelementen 7, 8 entnommen werden und über das Abtransportband 32 zur weiteren Bearbeitung weggeführt werden.

Eine Absenkeinrichtung 35 senkt die Behältnisträgerelemente 7 von der oberen Ebene 29 auf eine untere Ebene 33, auf der die Behältnisträgerelemente 7 zunächst einer Behältnisträgerelementreinigung 34 unterzogen werden, um weiter zum Hubförderer 28 gefördert zu werden.

Während die Behältnisträgerelemente 7, 8 auf der oberen Ebene 29 direkt aneinander anliegend gefördert werden, können die Behältnisträgerelemente auf der unteren Ebene 33 voneinander vereinzelt zum Hubförderer 28 zurückgeführt werden. Durch einen schnelleren Transport auf der unteren Ebene als auf der oberen Ebene, kann der Einsatz der benötigten Behältnisträgerelemente reduziert werden.

## Patentansprüche

1. Lebensmittelbearbeitungsanlage (1) mit mehreren umschlossenen Räumen (2 bis 5), zwischen denen ein Behältnisförderer (6) angeordnet ist, wobei der Behältnisförderer (6) mehrere Behältnisträgerelemente (7, 8) aufweist, die Behältnisträgerelemente (7, 8) eine ebene Oberfläche und darin Aufnahmen (9, 10) für Behältnisse (11, 12) aufweisen, sodass die Behältnisse (11, 12) gar nicht oder weniger als 5 mm, vorzugsweise weniger als 3 mm, über die ebene Oberfläche vorstehen, **dadurch gekennzeichnet, dass** eine Behältnisabdeckung (16) die ebene Oberfläche während der Förderung eines Behältnisträgerelementes (7, 8) von einem Raum (2, 3, 4) in den angrenzenden Raum (3, 4, 5) abdeckt.

2. Lebensmittelbearbeitungsanlage nach Anspruch 1, ***dadurch gekennzeichnet, dass*** die Behältnisabdeckung (16) in der Förderrichtung länger ist als das Behältnisträgerelement (7, 8).

3. Lebensmittelbearbeitungsanlage nach einem der vorgehenden Ansprüche, ***dadurch gekennzeichnet, dass*** die Behältnisabdeckung (16) das Behältnisträgerelement (7, 8) berührungslos abdeckt.

4. Lebensmittelbearbeitungsanlage nach einem der vorgehenden Ansprüche, ***dadurch gekennzeichnet, dass*** die angrenzenden Räume (2 bis 5) nur über Spalten (25, 26) in Verbindung stehen, die eine Breite von weniger als 3 mm, vorzugsweise weniger als 2 mm haben.

5. Lebensmittelbearbeitungsanlage nach einem der vorgehenden Ansprüche, ***dadurch gekennzeichnet, dass*** sie eine Grundplatte (17) aufweist, die der Behältnisabdeckung (16) gegenüberliegend angeordnet ist, wobei zwischen Behältnisabdeckung (16) und Grundplatte (17) ein Behältnisträgerelement (7, 8) angeordnet ist und vorzugsweise die Behältnisabdeckung (16) in der Förderrichtung länger ist als das Behältnisträgerelement (7, 8).

6. Lebensmittelbearbeitungsanlage nach einem der vorgehenden Ansprüche, ***dadurch gekennzeichnet, dass*** der Behältnisförderer (6) ein Endlosförderer ist.

7. Lebensmittelbearbeitungsanlage nach einem der vorgehenden Ansprüche, ***dadurch gekennzeichnet, dass*** das Behältnisträgerelement (7, 8) nebeneinander angeordnete Halterungen für Behältnisse (11, 12) und Behältnisdeckel (14) aufweist.

8. Lebensmittelbearbeitungsanlage nach einem der vorgehenden Ansprüche, ***dadurch gekennzeichnet, dass*** das Behältnisträgerelement (7, 8) mehr als fünf, vorzugsweise mehr als zehn, Aufnahmen für Behältnisse (11, 12) aufweist.

9. Lebensmittelbearbeitungsanlage nach einem der vorgehenden Ansprüche, ***dadurch gekennzeichnet, dass*** sie eine Abfüllanlage aufweist, die in einem der Räume (2 bis 5) angeordnet ist und mehrere Füllköpfe für jeweils einen von mehreren quer zur Förderrichtung angeordneten Behältnissen (11, 12), vorzugsweise für alle Behältnisse (11, 12) eines Behältnisträgerelementes (7, 8), zur gleichzeitigen Befüllung aufweist.

10. Lebensmittelbearbeitungsanlage nach einem der vorgehenden Ansprüche, ***dadurch gekennzeichnet, dass*** sie eine Abfüll- oder Verschließanlage (15) aufweist, die vor dem Verschließen des Behältnisses im Behältnis (11, 12) einen Unterdruck erzeugt.

11. Lebensmittelbearbeitungsanlage nach einem der vorgehenden Ansprüche, ***dadurch gekennzeichnet, dass*** sie in einem der umschlossenen Räume (2 bis 5) eine Abfüllanlage (15) und eine Behältnisverschließanlage (20) aufweist.

12. Lebensmittelbearbeitungsanlage nach einem der vorgehenden Ansprüche, ***dadurch gekennzeichnet, dass*** sie einen umschlossenen Raum (2) für eine Behältnisentkeimung und einen umschlossenen Raum (3) für eine Behältnisspülbegasung aufweist.

13. Lebensmittelbearbeitungsanlage nach einem der vorgehenden Ansprüche, ***dadurch gekennzeichnet, dass*** der Behältnisförderer (6) Behältnis (11, 12) und Behältnisdeckel (14) simultan durch die umschlossenen Räume (2 bis 5) fördert.

14. Lebensmittelbearbeitungsanlage nach einem der vorgehenden Ansprüche, ***dadurch gekennzeichnet, dass*** in Förderrichtung mehr als zwei und vorzugsweise mindestens vier umschlossene Räume (2 bis 5) mit unterschiedlicher Atmosphäre angeordnet sind, zwischen denen jeweils eine Behältnisabdeckung (16) angeordnet ist.

15. Lebensmittelbearbeitungsanlage nach einem der vorgehenden Ansprüche, ***dadurch gekennzeichnet, dass*** in Förderrichtung von einem Raum (2 bis 4) in den angrenzenden Raum (3 bis 5) der Druck im Raum ansteigt.

## Claims

1. Food processing plant (1) with several enclosed rooms (2 to 5), between which a container conveyor (6) is arranged, wherein the container conveyor (6) comprises several container carrier elements (7, 8) with a flat surface and therein moulds (9, 10) for containers (11, 12), such that the containers (11, 12) do not overlap at all or less than 5 mm, preferably less than 3 mm to the flat surface, **characterized in that** a container cover (16) covers the flat surface during the transport of an container carrier element (7, 8) from one room (2, 3, 4) to the adjacent room (3, 4, 5).

2. Food processing plant according to claim 1, **characterized in that** the container cover (16) is in transport direction longer than the container carrier elements (7, 8).

3. Food processing plant according to one of the preceding claims, **characterized in that** the container cover (16) covers the container carrier elements (7, 8) without contact.

4. Food processing plant according to one of the preceding claims, **characterized in that** the enclosed rooms (2 to 5) are only connected through gaps (25, 26) with a width of less than 3 mm, preferably less than 2 mm.

5. Food processing plant according to one of the preceding claims, **characterized in that** it comprises a base plate (17) arranged opposite to the container cover (16) wherein between the container cover (16) and the base plate (17) a container carrier element (7, 8) is arranged, and preferably the container cover (16) is in the transport direction longer than the container carrier element (7, 8).

6. Food processing plant according to one of the preceding claims, **characterized in that** the container conveyor (6) is an endless conveyor.

7. Food processing plant according to one of the preceding claims, **characterized in that** the container carrier element (7, 8) comprises side by side arranged holders for containers (11, 12) and container lids (14).

8. Food processing plant according to one of the preceding claims, **characterized in that** the container carrier element (7, 8) comprises more than five, preferably more than ten moulds for containers (11, 12).

9. Food processing plant according to one of the preceding claims, **characterized in that** it comprises a filling plant which is placed in one of the enclosed rooms (2 to 5) and comprises several filling heads, one for each of a plurality of transverse to the transport direction arranged containers (11, 12), which preferably for simultaneous filling of all containers (11, 12) of the container carrier element (7, 8).

10. Food processing plant according to one of the preceding claims, **characterized in that** it comprises a filling or sealing plant (15) and generates a negative pressure in the container before closing the container (11, 12).

11. Food processing plant according to one of the preceding claims, **characterized in that** it comprises in one of the enclosed rooms (2 to 5) a filling plant (15) and a container closure plant (20).

12. Food processing plant according to one of the preceding claims, **characterized in that** it comprises an enclosed space (2) for container sterilization and an enclosed space (3) for spray container gassing.

13. Food processing plant according to one of the preceding claims, **characterized in that** the container conveyor (6) transports a container (11, 12) and a container lid (14) simultaneously through the enclosed rooms (2 to 5).

14. Food processing plant according to one of the preceding claims, **characterized in that** in the transport direction more than two and preferably at least four enclosed rooms (2 to 5) are arranged comprising different air pressures and wherein between each of the enclosed spaces a container cover (16) is arranged.

15. Food processing plant according to one of the preceding claims, **characterized in that** in transport direction from one enclosed room (2 to 4) to the adjacent room (3 to 5) the air pressure rises.

## Revendications

1. Installation de traitement de denrées alimentaires (1) pourvue de plusieurs emplacements fermés (2 à 5) entre lesquels est disposé un transporteur de contenants (6), le transporteur de contenants (6) présentant plusieurs éléments porte-contenant (7, 8), les éléments porte-contenant (7, 8) présentant une surface plane pourvue de logements (9, 10) destinés aux contenants (11, 12), de manière telle que les contenants (11, 12) affleurent la surface plane ou fassent saillie de la surface plane de moins de 5 mm, de préférence de moins de 3 mm, **caractérisé en ce qu'**un couvercle de contenant (16) recouvre la surface plane pendant le transport d'un élément porte-contenant (7, 8) d'un emplacement (2, 3, 4) à l'emplacement adjacent (3, 4, 5).

2. Installation de traitement de denrées alimentaires selon la revendication 1, ***caractérisé en ce que*** le couvercle de contenant (16) dans la direction de transport est plus long que l'élément porte-contenant (7, 8).

3. Installation de traitement de denrées alimentaires selon l'une quelconque des revendications, ***caractérisé en ce que*** le couvercle de contenant (16) recouvre l'élément porte-contenant (7, 8) sans contact.

4. Installation de traitement de denrées alimentaires selon l'une quelconque des revendications précédentes, ***caractérisé en ce que*** les emplacements adjacents (2 à 5) ne sont reliés que par des fentes (25, 26) ayant une largeur de moins de 3 mm, de préférence de moins 2 mm.

5. Installation de traitement de denrées alimentaires selon l'une quelconque des revendications précédentes, ***caractérisé en* ce *qu***'elle présente une plaque de base (17) disposée opposée au couvercle de contenant (16), un élément porte-contenant (7, 8) étant agencé entre le couvercle de contenant (16) et la plaque de base (17) et de préférence le couvercle de contenant (16) dans la direction de transport étant plus long que l'élément porte-contenant (7, 8).

6. Installation de traitement de denrées alimentaires selon l'une quelconque des revendications précédentes, ***caractérisé en ce que*** le transporteur de contenants (6) est un transporteur sans fin.

7. Installation de traitement de denrées alimentaires selon l'une quelconque des revendications précédentes, ***caractérisé en ce que*** l'élément porte-contenant (7, 8) comporte des supports juxtaposés pour les contenants (11, 12) et les capots de contenants (14).

8. Installation de traitement de denrées alimentaires selon l'une quelconque des revendications précédentes, ***caractérisé en ce que*** l'élément porte-contenant (7, 8) comprend plus de cinq, de préférence plus de dix logements pour les contenants (11, 12).

9. Installation de traitement de denrées alimentaires selon l'une quelconque des revendications précédentes, ***caractérisé en ce qu***'elle comprend une installation de remplissage disposée dans un des emplacements (2 à 5) et comporte plusieurs têtes de remplissage pour l'un de plusieurs contenants (11, 12) disposés transversalement par rapport à la direction de transport, de préférence pour tous les contenants (11, 12) d'un élément porte-contenant (7, 8), pour un remplissage simultané.

10. Installation de traitement de denrées alimentaires selon l'une quelconque des revendications précédentes, ***caractérisé en* ce *qu***'elle comprend une installation de remplissage ou de fermeture (15) créant une dépression dans le contenant (11, 12) avant la fermeture du contenant.

11. Installation de traitement de denrées alimentaires selon l'une quelconque des revendications précédentes, ***caractérisé en* ce *qu***'elle comprend une installation de remplissage (15) et une installation de fermeture de contenants (20) dans un des emplacements fermés (2 à 5).

12. Installation de traitement de denrées alimentaires selon l'une quelconque des revendications précédentes, ***caractérisé en ce qu***'elle comprend un emplacement fermé (2) pour une désinfection des contenants et un emplacement fermé (3) pour un gazage par rinçage des contenants.

13. Installation de traitement de denrées alimentaires selon l'une quelconque des revendications précédentes, ***caractérisé en ce que*** le transporteur de contenants (6) transporte le contenant (11, 12) et le capot de contenant (14) simultanément à travers les emplacements fermés (2 à 5).

14. Installation de traitement de denrées alimentaires selon l'une quelconque des revendications, ***caractérisé en ce que*** dans la direction de transport plus de deux et de préférence au moins quatre emplacements fermés (2 à 5) d'atmosphères différentes sont disposés, entre chacun desquels est disposé un couvercle de contenants (16).

15. Installation de traitement de denrées alimentaires selon l'une quelconque des revendications précédentes, ***caractérisé en ce qu**'en* direction de transport la pression augmente dans l'emplacement d'un emplacement (2 à 4) à l'emplacement adjacent (3 à 5).
